# NEW EUROPEAN PATENT SPECIFICATION

(11) **EP 1 715 723 B2**
(45) Date of publication and mention of the opposition decision: **05.12.2012**
(45) Mention of the grant of the patent: 07.10.2009
(21) Application number: 06114027.3
(22) Date of filing: 16.05.2006
(51) Int. Cl.: H04R 25/00

(54) **Hearing system with network time**
Hörsystem mit Netzwerkzeit
Système auditif avec temps de réseau

(43) Date of publication of application: 25.10.2006
(73) Proprietor: Phonak AG, 8712 Stäfa (CH)
(72) Inventor: Glatt, Raoul, 8008 Zürich (CH); Knaus, Micha, 8645 Jona (CH); Laich, Rolf, 8630 Rüti (CH)
(74) Representative: Troesch Scheidegger Werner AG

(56) References cited:
- EP-A- 1 445 982
- EP-A1- 1 395 007
- EP-A1- 1 445 982
- EP-A2- 1 750 482
- WO-A-02/07479
- WO-A1-02/07479
- WO-A1-2005/024785
- WO-A2-03/091877
- WO-A2-2004/110099
- WO-A2-2004/110099
- US-A1- 2004 190 737
- US-A1- 2004 190 737

## Description

### Technical Field

The invention relates to a hearing system and to a method of operating a hearing system. A hearing system comprises at least two devices, at least one of which is a hearing device. Under "hearing device", a device is understood, which is worn in or at least adjacent to an individual's ear, with the object to improve or enable the individual's acoustical perception, regardless of whether the individual's perception is impaired or not. This may even be achieved by barring acoustic signals from being perceived, in the sense of hearing protection for the individual. Accordingly, the hearing device may be, e.g., a hearing aid, worn in or near the ear or implanted, a headphone, an earphone, a hearing protection device, a communication device or the like. The hearing system may, in particular, be a binaural hearing system comprising two hearing devices, in particular two hearing aids.

### Background of the Invention

In hearing systems, it can be desirable to provide for some kind of synchronization between the different devices of the system.

From US 2002/0131613, a pair of hearing devices forming a set of binaural hearing devices is known. A communication link between the two hearing devices is established by two electric conductors, wherein one conductor is established by the individual's body and another conductor is established by a wire. Each of the hearing devices comprises a time control unit, both of which are synchronized via said link. Each time control unit operates a controlled time-multiplexer, so as to repeatedly switch from a first time frame to a second time frame and back, i.e., time frame 1 -> time frame 2 -> time frame 1 -> time frame 2 and so on. During time frame 1, digitized output of the left microphone is led, simultaneously with digitized output of the right microphone, to the input of the right DSP. And vice versa, in time frame 2, digitized output of the right microphone is led, together with digitized output signal of the left microphone, to the input of the left DSP.

It is desirable to provide for an improved way of achieving synchronization in a hearing system.

Besides, from DE 100 48 341 C1, a hearing device is known, which can receive, when positioned close to an external sender, a sender-specific signal, e.g., a DCF77 signal. In said hearing device, hearing program changes can be automatically changed in dependence of such a DCF77 signal, so that, in dependence of the time of the day, an automatic selection of a pre-determined hearing program may be accomplished.

The document WO2004110099 discloses a hearing aid wireless network which facilitates the interconnection of a plurality of devices in the network such as hearing aids, remote controllers, fitting instruments, mobile phones, etc. One of the hearing devices functions as master device which regularly transmits synchronisation data to the other devices, which function as slave devices.

### Summary of the Invention

A goal of the invention is to create a hearing system and a method of operating a hearing system, that provide for an improved way of achieving synchronization in the hearing system.

An object of the invention is to provide for an increased reliability in the communication within a hearing system.

Another object of the invention is to provide for an increased flexiblilty in timing events within the hearing system.

Another object of the invention is to provide for an increased precision in the synchronization of events within the hearing system.

Another object of the invention is to improve the handling of a hearing system with synchronization.

Another object of the invention is to facilitate the operation of a hearing system with synchronization.

These objects are achieved by a hearing system and by a method of operating a hearing system according to the patent claims.

The method of operating a hearing system comprising at least two devices comprises the step of

a) establishing a common network time among said at least two devices.

The corresponding hearing system comprises at least two devices and means for establishing a common network time among said at least two devices.

Through establishing said common network time, the above-mentioned goals and objects can be achieved.

A common network time provides not only for some synchronism, but provides for an orientation (or sense of direction) in time. Therefore, a common network time not only allows for a precise synchronization (of events), but also for ordering (sequencing) events. A priorization of events (like tasks and actions) is enabled, based on the common network time.

Said establishing said common network time can be understood as providing the at least two devices with the current network time.

Usually, the devices of the hearing system are functionally interconnected with each other, at least pair-wise functionally interconnected. The functional interconnection is usually embodied by a wireless link.

The method may comprise the step of

k) transmitting, by a first of said at least two devices, information on the current network time.

Said transmitting (sending) is a transmitting (sending) to at least one other of the devices of the hearing system, usually to all other devices of the hearing system. This allows to distribute the common network time within the hearing system.

In the corresponding hearing system, said means comprise, in at least a first of said at least two devices, a transmitter adapted to transmitting information on the current network time.

The method may furthermore comprise the step of

l) receiving, by at least one other of said at least two devices, said information on the current network time.

Accordingly, said other device can pick up information on the common network time from another device of the hearing system.

In the corresponding hearing system, said means comprise, in at least one other of said at least two devices, a receiver adapted to receiving said information on the current network time.

Typically, a common network time has a defined time zero point, to which it refers, and has a monotonously rising value. The network time zero point may, numerically, be equal to zero, but it may as well be different from zero; it is just a reference for the network time, to which current network times, which are dealt with in the hearing system, may refer. Accordingly, the network time zero point could also be named "network time reference point".

The common network time may be given in ordinary time units, like hours, minutes and seconds, or in seconds only, or in other (network) time units, e.g., given by an the duration of a period of an oscillator. The common network time may be derived from outside the hearing system, e.g., from the internet or from a time signal provided via radio signals, e.g., like those used for some clocks and watches. The common network time may be generated within the hearing system.

Said establishing said common network time among said at least two devices may be implemented or understood as providing said at least two devices with information on the number of network time units that passed since a time zero point of said common network time. Said information on the number of network time units that passed since said time zero point may just allow to obtain said number, or may (directly) comprise said number. It is possible to foresee a network protocol for the communication among the devices of the hearing system, and to include information on the network time in said network protocol. This way, the network time may be established via said network protocol.

Said hearing system may be considered a hearing instrument system.

Said hearing system may be considered a network of devices comprising at least one hearing device.

A hearing system may comprise (as part of said means), in at least one of said at least two hearing devices, a receiver for receiving information on said common network time.

A typical hearing device comprises an input transducer (typically for transducing incoming acoustical sound into audio signals) and an output transducer (typically for transducing audio signals into signals to be perceived by the user of the hearing device, typically outgoing acoustical sound) and a signal processor functionally interconnected between said input and said output transducer for processing audio signals (typically for adjusting the hearing device to the user's needs and preferences).

In one embodiment of the method, step a) and/or step b) and/or step k) and/or step l) (and/or other communication steps described below) is carried out via a wireless link, e.g., an inductive link. It is also possible to use a wire-bound link. It is possible to use, e.g., any kind of electromagnetic links, e.g., radio frequency links, frequency-modulated links, and it is possible to use bluetooth or other connections known, e.g., from computer technology.

Accordingly, said means for establishing said common network time within the hearing system may comprise a communication link, in particular a wireless link, functionally interconnecting said at least two devices.

It is possible to provide at least one of said at least two devices upon its boot-up (during its booting time) with the current network time or when it starts to receive messages from another device of the hearing system.

It is possible to (also) provide at least one of said at least two devices with the current network time frequently during its operation, in particular periodically. E.g., each time another network time unit has passed, the current network time can be sent to said at least one of said at least two devices. Note, that not only the information, that another network time unit has passed (embodied, e.g., as a simple impulse), is sent, but that the current network time (information on the number of network time units that passed since the network time zero point) is sent, e.g., "4383 network time units" (since system start-up) or "14h, 22min, 18sec".

In another embodiment, the method comprises the steps of

e) receiving, in at least one of said at least two devices, the current network time; and

f) using an internal clock of said at least one device for generating time information at least approximately indicating the current network time.

This allows for less frequent communication (transmitting / receiving the current network time) while nevertheless maintaining a good synchronization and high-quality network time.

Said time information is indicative of the current network time, and it agrees with it the better, the more precise said internal clock is in agreement with a clock or timepiece used for deriving the common network time. The precision of the so-obtained common network time depends on how often step e) is performed and on the tuning and the stability of said internal clock.

Said internal clock may be as simple as an impulse generator or oscillator, and it may, by itself, "be unaware" of the current network time.

By means of said internal clock, it is possible to perform step e) only occasionally (periodically, possibly with varying period, possibly dependent on identified discrepances between said time information and the common network time). Said time information is, in other words, an extrapolation from a received current network time to further current network times.

The corresponding hearing system comprises, in at least one of said at least two devices, an internal clock for generating time information at least approximately indicating the current network time.

Each device of the hearing system may comprise an internal clock.

Besides steps e) and f), the method may furthermore comprise the step of

g) resynchronizing, after step f), to the common network time upon again receiving the current network time in said at least one device.

In one embodiment, the method comprises the step of

h) generating said common network time within said hearing system.

In the corresponding hearing system, said means comprise, in at least one of said at least two hearing devices, a timepiece for generating said common network time.

This makes the hearing system independent from external reference time signals. When said common network time is generated within the hearing system, the hearing system functions properly, wherever it is currently located and does not depend on the availability of suitable external reference time signals, which are not everywhere available. And furthermore, the devices of the hearing system do not need receivers for receiving externally-generated signals and may work with receivers for system-internal communication only.

In another embodiment, the method comprises the step of

i) receiving information on said common network time from a reference time base external to said hearing system.

In the corresponding hearing system, said means comprise a receiver for receiving information on said common network time from a reference time base external to said hearing system.

This frees the hearing system from the need for generating said common network time by itself.

It can be advantageous to foresee that not each device of the hearing system comprises a receiver for receiving information on said common network time from a reference time base external to said hearing system; in particular, such a receiver may be provided in only one of the devices of the hearing system. In that case, the hearing system comprises only a small number (in particular only one) of such receivers, which allows for a small-size and cost-effective design of the hearing system and its devices. A device capable of receiving said information on the externally-generated common network time may pass this information (or information derived therefrom) to other devices of the hearing system, via the link, which interconnects the devices of the hearing system, as has been described above.

The invention has remarkable advantages when (some or even all) messages communicated within the hearing system are provided with a network time reference, i.e., an information on time referring to the common network time:

The method may comprise the step of

m) transmitting, by a first of said at least two devices, a message comprising a network time reference.

This allows for identification and ordering / sorting of messages (or corresponding commands).

And the method may furthermore comprise the step of

n) receiving, by at least one other of said at least two devices, said message.

Said message may comprise, in addition to said network time reference, a command.

In one embodiment, said network time reference is a time reference for identifying said message, in particular a network time reference, which indicates the point in time of generation of said message or of said transmitting (sending) of said message.

This is like providing messages (or corresponding commands) with a time stamp (or time marker). It is possible, e.g., to recognize doubly-received commands and eliminate one of them, and it is possible to recognize commands that meanwhile became obsolete and delete those.

In one embodiment, said network time reference indicates a point in time, at which said command is to be executed. This allows to schedule tasks and to provide for latency-free synchronization.

These two embodiments may, of course, be combined, so that in a message, a command is provided with two (or even more) time references.

Said transmitting (sending) of said messages may be carried out in form of broadcasting. I.e., a device transmitting (sending) the message does not transmit (send) the message to specific devices, and it does not receive a reply by a device (successfully) receiving the message. Nevertheless, said transmitting may take place such, that a device transmitting a message resends said message a number of times, unless it receives a reply from at least one other device of the hearing system that has received said message.

Usually, said common network time will be established among all devices of the hearing system (or most of them).

Usually, said communication link will functionally connect all devices of the hearing system (or most of them).

Usually, all devices will be provided (at their respective start-up and/or later during operation) with the current network time, with the exception of the device generating the common network time (if the common network time is generated within the hearing system).

In one embodiment of the hearing system, at least one of said at least two devices is a hearing aid.

In one embodiment of the hearing system, the hearing system is a binaural hearing system.

The advantages of the methods correspond to the advantages of corresponding apparatuses.

Further preferred embodiments and advantages emerge from the dependent claims and the figures.

### Brief Description of the Drawings

Below, the invention is described in more detail by means of examples and the included drawings. The figures show schematically:
- Fig. 1: a hearing system with internally-generated common network time;
- Fig. 2: a diagram illustrating communication of the current network time;
- Fig. 3: a hearing system with externally-generated common network time;
- Fig. 4: a diagram illustrating resynchronization of the common network time;
- Fig. 5: an illustration of a case with elimination of twice-received commands;
- Fig. 6: an illustration of a case with elimination of obsolete commands (first part);
- Fig. 7: an illustration of a case with elimination of obsolete commands (second part);
- Fig. 8: an illustration of a case with transfer of a message containing a network time reference indicating the point in time at which a command shall be executed.

The reference symbols used in the figures and their meaning are summarized in the list of reference symbols. Generally, alike or alike-functioning parts are given the same or similar reference symbols. The described embodiments are meant as examples and shall not confine the invention.

### Detailed Description of the Invention

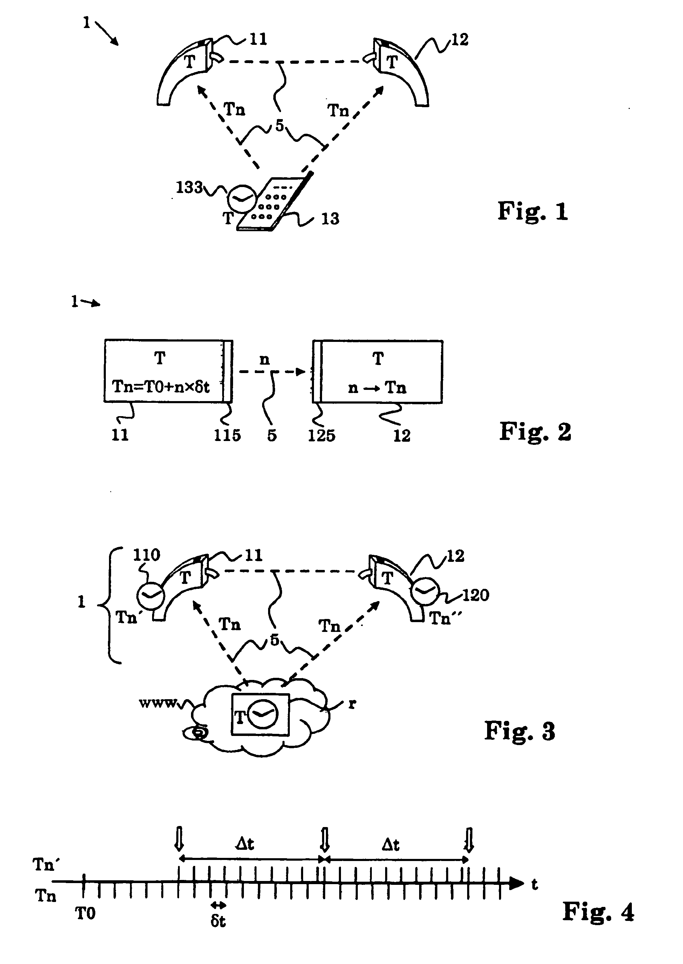

Fig. 1 schematically shows a hearing system 1 with internally-generated common network time T. Furthermore, it schematically shows a hearing system 1 comprising devices 11,12, which do not need internal clocks.

The hearing system comprises three devices 11,12,13, all of which are interconnected by a communication link 5, e.g., a wireless link. Devices 11 and 12 are hearing devices, which form a set of binaural hearing devices. Device 13 is a remote control 13. The remote control 13 comprises an internal timepiece 133 (indicated as a schematical clock), which may be a clock in the conventional sense or, as well, another source of ordered time units with a reference point (network time zero point), e.g., an electrical oscillating circuit or quartz oscillator, with a counter or the like.

In regular (or irregular) time intervals, device 13 sends (transmits) the current network time Tn via said communication link 5 to the other devices 11,12, e.g., by broadcasting. The corresponding synchronization message may, e.g., report that the current network time is "2 hours, 18 minutes and 34 seconds", or just "362 time units", in any case, the time information relates to a time zero point of the common network time T. The latter case (sending the number of passed time units) is illustrated in Fig. 2.

Fig. 2 shows a diagram illustrating a way of communicating the current network time Tn, i.e., the information used for distributing the common network time throughout the hearing system 1. The hearing system 1 of Fig. 2 comprises two devices 11,12. Device 11 generates the common network time Tn as Tn = T0 + n×δt, wherein T0 denotes the network time zero point, δt denotes the network time unit (e.g., seconds or oscillator periods) and n is the number of network time units that passed since the network time zero point T0. It is sufficient to communicate the number n over the communication link 5 to device 12. For communication, device 11 comprises a transmitter (or sender) 115, and device 12 comprises a receiver 125. Internally, it can be dealt with the number n, or Tn can be deduced from n. Coming back to Fig. 1, the sending (and receiving) of the current network time Tn will usually take place rather frequently, typically in intervals of one (or a number of) network time units δt. It is, on the other hand, possible, to distribute Tn only or mainly or additionally at specific events, e.g., when a command is transmitted via the communication link.

Fig. 3 schematically shows a hearing system 1 with externally-generated common network time T. Furthermore, Fig. 3 schematically shows a hearing system 1 comprising devices 11,12, which contain internal clocks 110,120. This makes it possible to communicate Tn far less frequently than in the example of Fig. 1, and yet maintain a good synchronization in the hearing system 1.

In Fig. 3, the network time T is received from outside the hearing system 1, e.g., from the internet (www), which comprises a reference time base r, or via a radio-signal like the DCF77-signal provided in central Europe (for controlling radio-controlled clocks and watches). The hearing system 1 (in the illustrated case: both devices 11,12) receives the common network time T via the communication link 5. It is also possible to foresee the communication link 5 only for hearing system-internal communication and provide for another communication link for accessing the externally generated common network time T. The current network time Tn may be encoded in any way, e.g., like in the examples above, as a time in usual time units or in form of the number n.

Due to said internal clocks 110,120, an occasional transfer of information on the common network time T is sufficient.

Said internal clocks 110,120 extrapolate from a received Tn value. Since such internal clocks never work perfectly (temperature drifts, manufacturing tolerances and the like), an occasional resynchronization should to be carried out in order to maintain a good precision of the common network time within the hearing system 1.

Fig. 4 shows a diagram illustrating the corresponding resynchronization of the common network time T, as it might take place for device 11 of Fig. 3. The generator of the common network time (in Fig. 3, the external reference time base r in the internet), produces regularly spaced signals with the time interval δt (network time unit). In time intervals Δt, the current network time Tn is broadcasted, typically, Δt = m×δt with m being an integer (typically of the order of 10² to 10⁵). Typically during booting, device 11 receives a first synchronization signal, indicated by the left-most open arrow. From then on, device 11 generates, by means of its internal clock 110, time information Tn', which shall represent the current network time as well as possible. I.e., device 11 extrapolates from the synchronization signal towards further Tn. In Fig. 4, Tn' is a little bit faster than Tn. After the time intervals Δt, another Tn-sychronization signal is received by device 11, and, for at least a moment, full synchronization of device 11 with the common network time T can be achieved again.

The establishment of a common network time T in a hearing system 1 has remarkable advantages over a simple synchronization. In a simple synchronization, impulses or signals in different devices are made to occur at the same moment in time; a clock cycle, sometimes also named system clock, is made available within the system. The establishment of a common network time T, however, provides for more information, since different moments in time are labelled with different time stamps (the current network time Tn), which allows to distinguish them from each other and to detect shifts or time differences and to sort or sequence events, like commands.

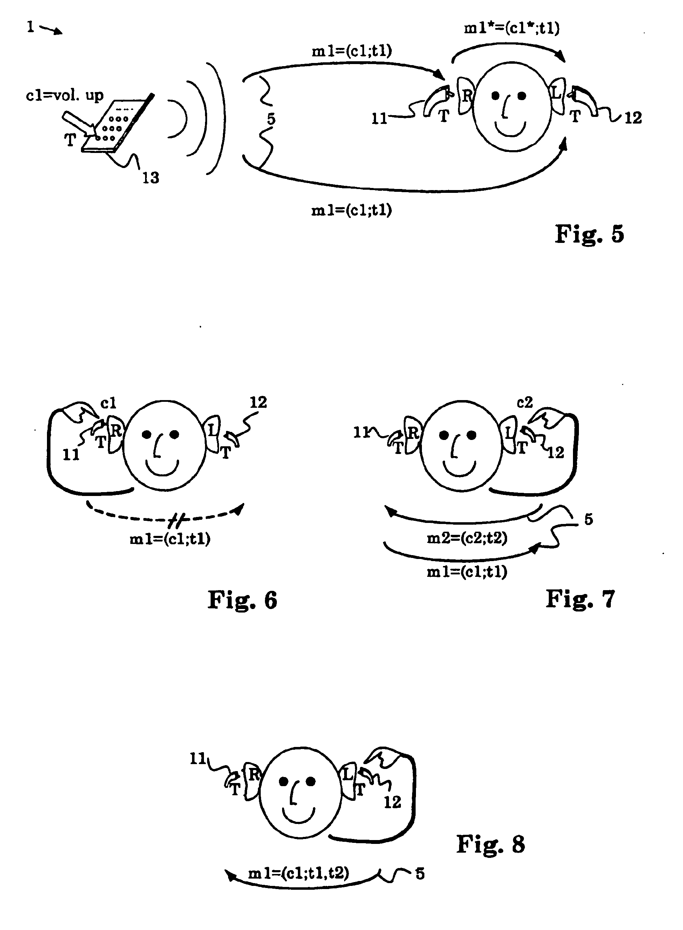

After Figs. 1 to 4 illustrated ways of establishing a common network time T, Figs. 5 to 8 now illustrate exemplary situations, in which a common network time T has been established, and in which the common network time T has remarkable advantages over a simple synchronization. These advantages are achieved by attaching at least one network time reference to a command.

Fig. 5 shows an illustration of a case with elimination of twice-received commands. The hearing system 1 comprises, like Fig. 1, a remote control 13 and two hearing devices 11,12 forming a set of binaural hearing devices. The user of the hearing system 1 presses a button on the remote control 13 (indicated by the open arrow), for increasing the volume by one step (e.g. +3dB). This provokes a communication over the communication link 5. A message m1 is communicated, which not only comprises a command c1 for increasing the volume by one step, but also a network time reference (or time stamp) t1, which may be indicating the time of sending the message m1.

Furthermore, it may be foreseen that the devices 11,12 replicate messages, which they receive, by sending a replica of the received message. This is of specific advantage when the communication is carried out as broadcasting.

Such a replication / forwarding mechanism can be foreseen, in order to extend the range over which the remote control 13 can be used. In addition, the replication mechanism may improve the reliability of a hearing system 1, since the effect of an interruption of the communication link between the remote control 13 and one of the devices 11,12 can be overcome, if at least the communication link connecting the two devices 11,12 is still working. This kind of hopping communication is in more detail described in the patent application publication EP 1 657 958 A1 of the same applicant, to be published on May 17, 2006.

For reasons of clarity, in Fig. 5, only the replication of message m1 by device 11 is illustrated and will be discussed.

Now, m1 is received by device 11, so that the requested one-step (+3dB) volume change can be carried out. But device 12 will receive m1 and, sent by device 11, the replica m1*. Incoming commands for the devices in the hearing system 1 are put onto a stack, as depicted in the table below; the command stacks of the devices 11,12 may look like this:

| | **R (device 11)** | | **L (device 12)** |
|---|---|---|---|
| command₁ | c1 [t₁] | | c1 [t₁] |
| command₂ | ... | | |
| command₃ | ... | | ... |

Device 12 receives two times the command to increase the volume by one step. Without further processing or intelligence, device 12 would increases the volume by two steps, i.e., by +6dB, whereas device 11 would, correctly, increase the volume by only one step (+3dB).

Therefore, it is advisable to foresee that each device 11,12 works through its command stack and eliminates commands that carry identical network time references ti. The replica of m1 (and of c1) can be identified and, as indicated in the table, be deleted. For the given volume step example, both devices 11,12 will execute c1 exactly once, resulting in a +3dB volume on either side. An unwanted double-execution of commands is successfully avoided.

If the user had toggled the volume-up switch twice, in order to increase the volume by two steps, two messages with different time stamps would have been sent by the remote control 13, and, despite of the replica-sending, the appropriate volume changes would have been carried out in either of the devices 11,12.

Also the case that the original message m1 had not reached device 12, but the replica m1* of m1 generated and sent by device 11 had been received by device 12, would be handled correctly.

Figs. 6 and 7 illustrate a case with elimination of obsolete commands, which may come about when the communication link connecting the devices is unstable (occasionally interrupted). The hearing system comprises a set of binaural hearing devices 11,12. In this hearing system, the sending (transmitting) of messages is not carried out in form of a simple broadcasting, but the sender expects to receive an indication from a receiving hearing device indicating that a message has been received, and resends messages a number of times if no such indication is received. If, after a certain time span, no such indication is received, no further attempts of resending are made, and commands contained in the message are not executed in any of the hearing devices.

In Fig. 6, the user tries, at the right hearing device 11, to toggle programs, i.e., he uses the toggle switch of the right hearing device 11 for selecting the next hearing program. For synchronizing the left hearing device 12 with hearing device 11, hearing device 12 sends a message m1, which comprises a command c1 for selecting the next hearing program and, in addition, a network time reference (or time stamp) t1, which may be indicating the time when the user toggled. Unfortunately, the link connecting the two hearing device 11,12 is temporarily down, e.g., due to interfering external electromagnetic signals. Accordingly, the message m1 is not received by hearing device 12, and consequently, hearing device 11 does not receive an indication that the message m1 has been received by hearing device 12. So, the requested program change occurs in neither of the hearing devices 11,12.

Then the user recognizes that the hearing devices 11,12 did not change programs and uses thereupon, as shown in Fig. 7, the toggle switch of the left hearing device 12 for selecting the next hearing program. This leads to the generation of a message m2, which comprises a command c2 for selecting the next hearing program and, in addition, a network time reference (or time stamp) t2, which may be indicating the time when the user toggled the described second time.

By coincidence, in the mean time, the link 5 has reestablished again, thus enabling the communication between the hearing devices again. Hearing device 11 receives said message m2 and is still resending message m1, so that, with the link up again, m1 is received by hearing device 12.

Accordingly, the command stacks of the devices 11,12 may look like this:

| | **R (device 11)** | | **L (device 12)** |
|---|---|---|---|
| command₁ | | | c2 [t₂] |
| command₂ | c2 [t₂] | | |
| command₃ | ... | | ... |

Hearing device 11 has two times a command indicating to change to the next hearing program, once from toggling its own program toggle switch (at time t1), and once from toggling at hearing device 12 (at time t2), as received via the link 5. Hearing device 12 has two times a command indicating to change to the next hearing program, too: once from toggling its own program toggle switch (at time t2), and once from a resending attempt from hearing device 11 dating back to the toggling at hearing device 11 (at time t1). Without further processing or intelligence, both devices 11,12 would change to the over-next program instead of to the next program, as desired.

Therefore, it is advisable to foresee that each device 11,12 works through its command stack and eliminates commands that are obsolete. This can be judged from the time stamps. That version of two alike commands, which has the older time stamp, shall be deleted (if the difference in time between the time stamps is smaller than the time span during which resending of messages is attempted). In the depicted case, command c1 (from time t1) will be deleted from device's 12 command stack and from device's 11 command stack.

Note, that indications of reception of messages are not drawn in the figures.

Fig. 8 shows an illustration of a case with transfer of a message containing a network time reference indicating the point in time at which a command shall be executed. The hearing system in Fig. 8 comprises two devices 11,12.

Frequently, an acoustic acknowledge signal is assigned to actions done to a hearing system. Typical examples of such actions are: changing the volume, changing the hearing program, alarm indicating low battery (battery end-of-life alarm).

For a binaural hearing system, the user usually expects the acoustic acknowledge signals to appear synchronized on both sides. A network time reference can be used to precisely control the synchronization.

In Fig. 8, the user toggles the program change switch. This will lead to the generation of a command c1 with a time stamp t1 and another network time reference t2, all combined in a message m1. Like in the examples above, t1 may be the point in time at which the command c1 is generated or at which the message m1 is sent. At the point in time t2, which is deliberately chosen to be later than t1, the acknowledge signal shall be played to the user, whereas the program change shall take place as soon as possible in both devices 11,12. So, in both devices, a program change is carried out very quickly. A high-precision synchronization thereof is usually not particularly important. But the acknowledge sound will be played, with high precision, at the very same time (t2) in both devices 11,12. The network time reference t2 may in particular be chosen such, that the devices have enough time to settle into a stable state after the program change. Without the network time reference t2, the two acknowledge signals are very unlikely to appear sufficiently synchronously, since transferring the commands over the link is subject to latency.

In the situation / example of Fig. 8, there can also be two separate messages be produced: one for the (immediate) program change, and one for the acknowledge sound to be played at the later point in time t2.

Another way to deal with the situation / example of Fig. 8, which also has the same effect as the other two described ways, is that one message is produced, which contains the toggle (program change) command and also the acoustic aknowledge command, thus m1 = (toggle[t1];ackn[t2]). Command stacks of the devices 11, 12 may look like this:

| | **R (device 11)** | | **L (device 12)** |
|---|---|---|---|
| command₁ | toggle [t1] | | toggle [t1] |
| command₂ | ackn [t2] | | ackn [t2] |
| command₃ | ... | | ... |

As has been shown by means of the various examples and embodiments above, the common network time T not only allows to let program changes, volume changes or acknowledge signals and the like occur simultaneously in each hearing device of a set of binaural hearing devices, but also improves the management of commands and the reliability of the hearing system.

### List of Reference Symbols

- 1: hearing system
- 11: device, hearing device
- 110: clock, internal clock
- 115: transmitter
- 12: device, hearing device
- 120: clock, internal clock
- 125: receiver
- 13: device, remote control
- 133: timepiece, internal timepiece
- 5: wireless link, communication link

- ci: command
- L: left
- mi: message
- n: number of network time units that passed since the network time zero point
- r: (external) reference time base
- R: right
- ti: network time reference
- T: common network time
- Tn: current network time
- Tn' ,Tn": time information
- T0: network time zero point
- δt: network time unit
- Δt: time interval
- www: internet

## Claims

1. Method of operating a hearing system (1) comprising at least two devices (11,12,13), said method comprising the step of
a) establishing a common network time (T) among said at least two devices (11,12,13);
**characterized in** the step of
m) transmitting, by a first (13) of said at least two devices (11,12,13), a message (mi), which message (mi) comprises a network time reference (ti) and, in addition, a command (ci) the execution of which is requested, wherein said transmitting of said message (mi) is carried out in form of broadcasting.

2. Method according to claim 1, wherein said network time reference (ti) is a time reference (ti) for identifying said message (mi).

3. Method according to claim 2, wherein said network time reference (ti) indicates the point in time of generation of said message (mi) or of said transmitting of said message (mi).

4. Method according to claim 1, wherein said network time reference (ti) indicates a point in time, at which said command (ci) is to be executed.

5. Method according to one of the preceding claims, comprising the step of
n) receiving, by at least one other (11,12) of said at least two devices (11,12,13), said message (mi).

6. Method according to one of the preceding claims, comprising the step of
k) transmitting, by a first (13) of said at least two devices (11,12,13), information on the current network time (Tn).

7. Method according to claim 6, comprising the step of
l) receiving, by at least one other (11,12) of said at least two devices (11,12,13), said information on the current network time (Tn).

8. Method according to one of the preceding claims, comprising the step of
b) providing said at least two devices (11,12,13) with information on the number (n) of network time units (δt) that passed since a time zero point (TO) of said common network time (T).

9. Method according to one of the preceding claims, wherein step a) and/or step b) and/or step k) and/or step 1) is carried out via a wireless link (5).

10. Method according to one of the preceding claims, comprising the step of
c) providing at least one (11;12) of said at least two devices (11,12,13) with the current network time (Tn) during its boot-time or when it starts to receive messages from another device (13;12;11) of the hearing system (1).

11. Method according to one of the preceding claims, comprising the step of
d) providing at least one (11;12) of said at least two devices (11,12,13) with the current network time (Tn) frequently during its operation.

12. Method according to one of the preceding claims, comprising the steps of
e) receiving, in at least one (11;12) of said at least two devices (11,12,13), the current network time (Tn); and
f) using an internal clock (110;120) of said at least one device (11;12) for generating time information (Tn') at least approximately indicating the current network time (Tn).

13. Method according to claim 12, furthermore comprising the step of
g) resynchronizing, after step f), to the common network time (T) upon again receiving the current network time (Tn) in said at least one (11;12) device.

14. Method according to one of the preceding claims, comprising the step of
h) generating said common network time (T) within said hearing system (1).

15. Method according to one of claims 1 to 13, comprising the step of
i) receiving information on said common network time (T) from a reference time base (r) external to said hearing system (1).

16. Use of a common network time (T) established among at least two devices (11,12,13) of a hearing system (1) for ordering or priorizing commands the execution of which is requested and which are transmitted by a first (13) of said at least two devices (11,12,13) in a message (mi) comprising, in addition, a network time reference (ti).

17. Hearing system (1) comprising at least two devices (11,12,13) and means for establishing a common network time (T) among said at least two devices (11,12,13),
**characterized in**
being adapted to transmitting, by a first (13) of said at least two devices (11,12,13), a message (mi), which message (mi) comprises a network time reference (ti) and, in addition, a command (ci) the execution of which is requested, wherein said transmitting of said message (mi) is carried out in form of broadcasting.

18. System (1) according to claim 17, wherein said means comprise, in at least a first (13) of said at least two devices (11,12,13), a transmitter (115) adapted to transmitting information on the current network time (Tn).

19. System (1) according to claim 18, wherein said means comprise, in at least one other (11;12) of said at least two devices (11,12,13), a receiver (125) adapted to receiving said information on the current network time (Tn).

20. System (1) according to one of claims 17 to 19, wherein said means comprise a communication link (5) functionally interconnecting said at least two devices (11,12,13), in particular a wireless link (5).

21. System (1) according to one of claims 17 to 20, wherein said means comprise a receiver for receiving information on said common network time (T) from a reference time base (r) external to said hearing system (1).

22. System (1) according to one of claims 17 to 20, wherein said means comprise, in at least one of said at least two hearing devices (13), a timepiece (133) for generating said common network time (T).

23. System (1) according to one of claims 17 to 22, which comprises, in at least one (11;12) of said at least two devices (11,12,13), an internal clock (110;120) for generating time information (Tn') at least approximately indicating the current network time (Tn).

24. System (1) according to one of claims 17 to 23, wherein at least one of said at least two devices (11,12,13) is a hearing aid.

25. System (1) according to one of claims 17 to 24, which is a binaural hearing system (1).

26. System (1) according to one of claims 17 to 25, wherein said network time reference (ti) is a time reference (ti) for identifying said message (mi).

27. System (1) according to one of claims 17 to 25, wherein said network time reference (ti) indicates a point in time, at which said command (ci) is to be executed.

## Patentansprüche

1. Verfahren zum Betreiben eines Hörsystems (1), das mindestens zwei Geräte (11,12,13) aufweist, wobei das Verfahren den folgenden Schritt aufweist
a) Etablieren einer gemeinsamen Netzwerk-Zeit (T) unter den mindestens zwei Geräten (11,12,13);
und **gekennzeichnet ist durch** den Schritt
m) Übertragen einer Nachricht (mi) **durch** ein erstes (13) der genannten zwei Geräte (11,12,13), wobei die Nachricht (mi) eine Netzwerk-Zeit-Referenz (ti) und zusätzlich noch einen Befehl (ci) aufweist, dessen Ausführung beantragt wird, wobei das genannte Übertragen der genannten Mittelung (mi) **durch** Broadcast-Übertragung durchgeführt wird.

2. Verfahren gemäss Anspruch 1, wobei die genannte Netzwerk-Zeit-Referenz (ti) eine Zeit-Referenz (ti) zum Identifizieren der genannten Mittelung (mi) ist.

3. Verfahren gemäss Anspruch 2, wobei die genannte Zeit-Referenz (ti) den Zeitpunkt der Erstellung der genannten Nachricht (mi) oder der genannten Übertragung der genannten Nachricht (mi) bezeichnet.

4. Verfahren gemäss Anspruch 1, wobei die genannte Zeit-Referenz (ti) den Zeitpunkt bezeichnet, an dem der genannte Befehl (ci) auszuführen ist.

5. Verfahren gemäss einem der vorangegangenen Ansprüche, aufweisend den Schritt
n) Empfangen der genannten Mitteilung (mi) durch mindestens ein weiteres (11,12) der genannten mindestens zwei Geräte (11,12,13).

6. Verfahren gemäss einem der vorangegangenen Ansprüche, aufweisend den Schritt
k) Übertragen von Information über die aktuelle Netzwerk-Zeit (Tn) mittels eines ersten (13) der genannten mindestens zwei Geräte (11,12,13).

7. Verfahren gemäss Anspruch 6, aufweisend den Schritt
l) Empfangen der genannten Information über die aktuelle Netzwerk-Zeit (Tn) durch mindestens ein anderes (11,12) der genannten mindestens zwei Geräte (11,12,13).

8. Verfahren gemäss einem der vorangegangenen Ansprüche, aufweisend den Schritt
b) Versorgen der genannten mindestens zwei Geräte (11,12,13) mit Information über die Anzahl (n) von Netzwerk-Zeit-Einheiten (δt), die seit einem Zeit-Nullpunkt (T0) der genannten gemeinsamen Netzwerkzeit (T) vergangen sind.

9. Verfahren gemäss einem der vorangegangenen Ansprüche, wobei Schritt a) und/oder Schritt b) und/oder Schritt k) und/oder Schritt 1) über eine drahtlose Verbindung (5) durchgeführt wird.

10. Verfahren gemäss einem der vorangegangenen Ansprüche, aufweisend den Schritt
c) Versorgen mindestens eines (11;12) der genannten mindestens zwei Geräte (11,12,13) mit der aktuellen Netzwerk-Zeit (Tn) während dessen Aufstart-Phase oder wenn es beginnt, Mitteilungen von einem anderen Gerät (13;12;11) des Hörystems (1) zu empfangen.

11. Verfahren gemäss einem der vorangegangenen Ansprüche, aufweisend den Schritt
d) Versorgen mindestens eines (11;12) der genannten mindestens zwei Geräte (11,12,13) mit der aktuellen Netzwerk-Zeit (Tn) häufig während dessen Betriebes.

12. Verfahren gemäss einem der vorangegangenen Ansprüche, aufweisend die Schritte
e) Empfangen der aktuellen Netzwerk-Zeit (Tn) in mindestens einem (11;12) der genannten mindestens zwei Geräte (11,12,13); und
f) Verwenden einer internen Uhr (110;120) des genannten mindestens einen Gerätes (11;12) zur Erzeugung von Zeit-Information (Tn'), die mindestens näherungsweise die aktuelle Netzwerk-Zeit (Tn) bezeichnet.

13. Verfahren gemäss Anspruch 12, weiter aufweisend den Schritt
g) nach Schritt f) und auf ein erneutes Empfangen der aktuellen Netzwerk-Zeit (Tn) in dem genannten mindestens einen Gerät (11;12) hin Resynchronisieren auf die gemeinsame Netzwerk-Zeit (T).

14. Verfahren gemäss einem der vorangegangenen Ansprüche, aufweisend den Schritt
h) Erzeugen der genannten gemeinsamen Netzwerk-Zeit (T) innerhalb des Hörsystems (1).

15. Verfahren gemäss einem der Ansprüche 1 bis 13, aufweisend den Schritt
i) Empfangen von Information über die genannte gemeinsame Netzwerk-Zeit (T) von einer Referenz-Zeit-Basis (r) ausserhalb des Hörsystems (1).

16. Verwendung einer gemeinsamen, unter mindestens zwei Geräten (11,12,13) eines Hörsystems (1) etablierten Netzwerk-Zeit (T) für das Ordnen oder Priorisieren von Befehlen, deren Ausführung beantragt ist und welche durch ein erstes (13) der mindestens zwei Geräte (11,12,13) in einer Mitteilung (mi) übermittelt werden, die zusätzlich eine Netzwerk-Zeit-Referenz (ti) beinhaltet.

17. Hörsystem (1) umfassend mindestens zwei Geräte (11,12,13) und Mittel zum Etablieren einer gemeinsamen Netzwerk-Zeit (T) unter diesen mindestens zwei Geräten (11,12,13), **dadurch gekennzeichnet, dass** es ausgelegt ist, durch ein erstes (13) der mindestens zwei Geräte (11,12,13) eine Mitteilung (mi) zu übertragen, die eine Netzwerk-Zeit-Referenz (ti) und zusätzlich noch einen Befehl (ci) enthält, dessen Ausführung beantragt ist, wobei das genannte Übertragen der genannten Mittelung (mi) durch Broadcast-Übertragung durchgeführt wird.

18. System (1) gemäss Anspruch 17, wobei die genannten Mittel in mindestens einem ersten (13) der genannten mindestens zwei Geräte (11,12,13) einen Sender (115) aufweisen, der ausgelegt ist, Information über die aktuelle Netzwerk-Zeit (Tn) zu übertragen.

19. System (1) gemäss Anspruch 18, wobei die genannten Mittel in mindestens einem ersten (13) der genannten mindestens zwei Geräte (11,12,13) einen Empfänger (125) aufweisen, der ausgelegt ist, Information über die aktuelle Netzwerk-Zeit (Tn) zu empfangen.

20. System (1) gemäss einem der Ansprüche 17 bis 19, wobei die Mittel eine Kommunikations-Verbindung (5), insbesodendere eine drahtlose Verbindung (5), aufweisen, die die genannten mindestens zwei Geräte (11,12,13) miteinander wirkverbindet.

21. System (1) gemäss einem der Ansprüche 17 bis 20, wobei die Mittel einen Empfänger zum Empfangen von Information über die genannte gemeinsame Netzwerk-Zeit (T) von einer Referenz-Zeit-Basis (r) ausserhalb des Hörsystems (1) aufweisen.

22. System (1) gemäss einem der Ansprüche 17 bis 20, wobei die Mittel in mindestens einem der genannten zwei Geräte (11,12,13) einen Zeitmesser (133) zur Erzeugung der genannten gemeinsamen Netzwerk-Zeit (T) aufweisen.

23. System (1) gemäss einem der Ansprüche 17 bis 22, das in mindestens einem (11;12) der mindestens zwei Geräte (11,12,13) eine interne Uhr (110;120) zum Erzeugen von Zeit-Information (Tn') beinhaltet, die mindestens näherungsweise die aktuelle Netzwerk-Zeit (Tn) bezeichnet.

24. System (1) gemäss einem der Ansprüche 17 bis 23, wobei mindestens eines der genannten mindestens zwei Geräte (11,12,13) ein Hörgerät ist.

25. System (1) gemäss einem der Ansprüche 17 bis 24, das ein binaurales Hörsystem (1) ist.

26. System (1) gemäss einem der Ansprüche 17 bis 25, wobei die Netzwerk-Zeit-Referenz (ti) eine Zeit-Referenz (ti) zum Identifizieren der genannten Mittelung (mi) ist.

27. System (1) gemäss einem der Ansprüche 17 bis 25, wobei die genannte Netzwerk-Zeit-Referenz (ti) einen Zeitpunkt bezeichnet, an dem der genannte Befehl (ci) auszuführen ist.

## Revendications

1. Procédé pour l'opération d'un système auditif (1) comprenant au moins deux dispositifs (11, 12, 13), ledit procédé comprenant l'étape de:
a) établir un temps de réseau commun (T) entre lesdits au moins deux dispositifs (11, 12, 13);
et **caractérisé par** l'étape de
m) transmettre, par un premier (13) desdits au moins deux dispositifs (11, 12, 13), un message (mi), ledit message (mi) comprend une référence de temps de réseau (ti) et, de plus, une instruction (ci) dont l'exécution est requise, ladite transmission dudit message (mi) étant exécutée sous forme de radio-diffusion.

2. Procédé selon la revendication 1, dans lequel ladite référence de temps de réseau (ti) est une référence de temps (ti) pour identifier ledit message (mi).

3. Procédé selon la revendication 2, dans lequel ladite référence de temps (ti) indique le moment de génération dudit message (mi) ou de ladite transmission dudit message (mi).

4. Procédé selon la revendication 1, dans lequel ladite référence de temps de réseau (ti) indique le moment où ladite instruction (ci) doit être exécutée.

5. Procédé selon l'une quelconque des revendications précédentes, comprenant l'étape de
n) recevoir, par au moins un autre (11, 12) desdits au moins deux dispositifs (11, 12, 13), ledit message (mi).

6. Procédé selon l'une quelconque des revendications précédentes, comprenant l'étape de
k) transmettre, par un premier (13) desdits au moins deux dispositifs (11, 12, 13), des informations se rapportant au temps de réseau courant (Tn).

7. Procédé selon la revendication 6, comprenant l'étape de
l) recevoir, par au moins un autre (11, 12) desdits au moins deux dispositifs (11, 12, 13), ladite information se rapportant au temps de réseau courant (Tn).

8. Procédé selon l'une quelconque des revendications précédentes, comprenant l'étape de
b) fournir lesdits au moins deux dispositifs (11, 12, 13) avec d'information se rapportant au nombre (n) d'unités de temps de réseau (δt) qui ont passé depuis un point de temps zéro (T0) dudit temps de réseau commun (T).

9. Procédé selon l'une quelconque des revendications précédentes, dans lequel l'étape a) et/ou l'étape b) et/ou l'étape k) et/ou l'étape 1) est exécutée par une liaison sans fil (5).

10. Procédé selon l'une quelconque des revendications précédentes, comprenant l'étape de
c) fournir au moins un (11; 12) desdits au moins deux dispositifs (11, 12, 13) avec le temps de réseau courant (Tn) durant son temps d'amorçage ou lorsqu'il commence à recevoir des messages d'un autre dispositif (13; 12; 11) du système auditif (1).

11. Procédé selon l'une quelconque des revendications précédentes, comprenant l'étape de
d) fournir au moins un (11; 12) desdits au moins deux dispositifs (11, 12, 13) avec le temps de réseau courant (Tn) fréquemment durant son fonctionnement.

12. Procédé selon l'une quelconque des revendications précédentes, comprenant les étapes de
e) recevoir, dans au moins un (11; 12) desdits au moins deux dispositifs (11, 12, 13), le temps de réseau courant (Tn); et
f) utiliser une horloge interne (110; 120) dudit au moins un dispositif (11; 12) pour générer d'information de temps (Tn') indiquant au moins approximativement le temps de réseau courant (Tn).

13. Procédé selon la revendication 12, comprenant en outre l'étape de
g) resynchroniser, après l'étape f), au temps de réseau commun (T) lors de la réception à nouveau du temps de réseau courant (Tn) dans ledit au moins un (11; 12) dispositif.

14. Procédé selon l'une quelconque des revendications précédentes précédentes, comprenant l'étape de h) générer ledit temps de réseau commun (T) dans ledit système auditif (1).

15. Procédé selon l'une quelconque des revendications 1 à 13, comprenant l'étape de
i) recevoir des informations se rapportant audit temps de réseau commun (T) d'une base de temps de référence (r) externe audit système auditif (1).

16. Utilisation d'un temps de réseau commun (T) établi parmi au moins deux dispositifs (11, 12, 13) d'un système auditif (1) pour ordonner ou hiérarchiser des instructions dont l'exécution est requise et qui sont transmises par un premier (13) desdits au moins deux dispositifs (11, 12, 13) dans un message (mi) comprenant, additionnellement, une référence de temps de réseau (ti).

17. Système auditif (1) comprenant au moins deux dispositifs (11, 12, 13) et des moyens pour établir un temps de réseau commun (T) parmi lesdits au moins deux dispositifs (11, 12, 13), caractérisé en étant apte à transmettre, par un premier (13) desdits au moins deux dispositifs (11, 12, 13), un message (mi), ledit message (mi) comprend une référence de temps de réseau (Ti) et, de plus, une instruction (ci) dont l'exécution est requise, ladite transmission dudit message (mi) étant exécutée sous forme de radio-diffusion.

18. Système (1) selon la revendication 17, dans lequel lesdits moyens comprennent, dans au moins un premier (13) desdits au moins deux dispositifs (11, 12, 13), un transmetteur (115) apte à transmettre des informations sur le temps de réseau courant (Tn).

19. Système (1) selon la revendication 18, dans lequel lesdits moyens comprennent, dans au moins un autre (11; 12) desdits au moins deux dispositifs (11, 12, 13), un récepteur (125) apte à recevoir ladite information se rapportant au temps de réseau courant (Tn).

20. Système (1) selon l'une quelconque des revendications 17 à 19, dans lequel lesdits moyens comprennent une liaison de communication (5) interconnectant fonctionnellement lesdits au moins deux dispositifs (11, 12, 13), en particulier une liaison sans fil (5).

21. Système (1) selon l'une quelconque des revendications 17 à 20, dans lequel lesdits moyens comprennent un récepteur pour recevoir des informations se rapportant audit temps de réseau commun (T) depuis une base de temps de référence (r) externe audit système auditif (1).

22. Système (1) selon l'une quelconque des revendications 17 à 20, dans lequel lesdits moyens comprennent, dans au moins un desdits au moins deux dispositifs auditifs (13), un appareil horaire (133) pour générer ledit temps de réseau commun (T).

23. Système (1) selon l'une quelconque des revendications 17 à 22, qui comprend, dans au moins un (11; 12) desdits au moins deux dispositifs (11, 12, 13), une horloge interne (110, 120) pour générer une information de temps (Tn') indiquant au moins approximativement le temps de réseau courant (Tn).

24. Système (1) selon l'une quelconque des revendications 17 à 23, dans lequel au moins un desdits au moins deux dispositifs (11, 12, 13) est une prothèse auditive.

25. Système (1) selon l'une quelconque des revendications 17 à 24, qui est un système audutif binaural (1).

26. Système (1) selon l'une quelconque des revendications 17 à 25, dans lequel ladite référence de temps de réseau (ti) est une référence de temps (ti) pour identifier ledit message (mi).

27. Système (1) selon l'une quelconque des revendications 17 à 25, dans lequel ladite référence de temps de réseau (ti) indique le moment auquel ladite instruction (ci) doit être exécutée.
